# EUROPÄISCHE PATENTSCHRIFT

(11) **EP 2 464 488 B1**
(45) Veröffentlichungstag und Bekanntmachung des Hinweises auf die Patenterteilung: **11.06.2014**
(21) Anmeldenummer: 10739289.6
(22) Anmeldetag: 23.07.2010
(51) Int. Cl.: B23K 9/09, B23K 9/095

(54) **VERFAHREN ZUM AUFTRENNEN EINES KURZSCHLUSSES BEIM KURZLICHTBOGENSCHWEIßEN UND SCHWEIßGERÄT ZUM KURZLICHTBOGENSCHWEIßEN**
METHOD FOR DISCONNECTING A SHORT CIRCUIT DURING SHORT-ARC WELDING AND WELDING DEVICE FOR SHORT-ARC WELDING
PROCÉDÉ D'INTERRUPTION D'UN COURANT DE COURT-CIRCUIT LORS D'UN SOUDAGE À ARC COURT, ET APPAREIL DE SOUDAGE CORRESPONDANT POUR LE SOUDAGE À ARC COURT

(30) Priorität: 10.08.2009 AT 12602009
(43) Veröffentlichungstag der Anmeldung: 20.06.2012
(73) Patentinhaber: Fronius International GmbH, 4643 Pettenbach (AT)
(72) Erfinder: ARTELSMAIR, Josef, A-4552 Wartberg (AT)
(74) Vertreter: Sonn & Partner Patentanwälte
(86) Internationale Anmeldenummer: PCT/AT2010/000272
(87) Internationale Veröffentlichungsnummer: WO 2011/017725

(56) Entgegenhaltungen:
- EP-A1- 0 324 960
- WO-A1-2009/040620
- WO-A2-2008/137371
- DE-A1- 2 342 710
- US-A1- 2008 006 616

## Beschreibung

Die Erfindung betrifft ein Verfahren zum Auftrennen bzw. Lösen eines Kurzschlusses beim Kurzlichtbogenschweißen, wobei beim Auftreten eines Kurzschlusses ein Zeitfenster gestartet wird, in dem ein definierter Stromverlauf zum Auftrennen des Kurzschlusses innerhalb des Zeitfensters durchgeführt wird, und beim Überschreiten des Zeitfensters eine Erhöhung des Stromes durchgeführt wird.

Weiters betrifft die Erfindung ein Schweißgerät zum Kurzlichtbogenschweißen mit zumindest einer Stromquelle und einer Steuervorrichtung und einem angeschlossenen Schweißbrenner.

Nachteilig bei dem bekannten Verfahren ist, dass bei jedem Kurzschluss immer der gleiche Stromverlauf mit den gleichen Werten bzw. Parametern und Kurvenformen durchgeführt wird, unabhängig davon, wie lange der Kurzschluss dauert. Somit wird kein Einfluss auf den Prozess genommen und die Schweißqualität kann kaum verbessert werden.

Derartige Verfahren sind beispielsweise aus der WO 2008/137371 A2, der WO 2009/040620 A1, der EP 0 324 960 A1 oder der DE 23 42 710 C3 bekannt.

Die Aufgabe der vorliegenden Erfindung besteht in der Schaffung eines oben genannten Verfahrens zum Lösen bzw. Auftrennen eines Kurzschlusses beim Kurzlichtbogenschweißen und eines oben genannten Schweißgeräts hierfür, durch welche die Schweißqualität wesentlich verbessert und die Stabilität des Schweißprozesses aufrecht erhalten wird. Nachteile bekannter Verfahren und Schweißgeräte sollen vermieden oder zumindest reduziert werden.

Gelöst wird die Aufgabe durch ein oben genanntes Verfahren, wobei nach Ablauf des vorgebaren Zeitfensters während eines Kurzschlusses dieser Stromverlauf zum Lösen des Kurzschlusses erfasst und zumindest ein Wert bzw. Parameter beim Lösen des Kurzschlusses hinterlegt bzw. gespeichert wird, wobei zumindest ein Wert bzw. Parameter im Zeitfenster des folgenden Kurzschlusses in Abhängigkeit des hinterlegten Werts bzw. Parameters angepasst wird. Vorteilhaft ist hierbei, dass durch die aktive Anpassung zum Lösen des Kurzschlusses der Stromanstieg im Zeitfenster flacher eingestellt werden kann, sodass ein sogenannter weicher Lichtbogen mit weniger Spritzerauswurf erzielt wird, da bei einer flacheren Anstiegskurve beim Lösen des Kurzschlusses der Lichtbogendruck wesentlich geringer ist und somit viel weniger Material weggeschleudert wird. Damit kann auch mit wesentlich kürzeren Lichtbögen gearbeitet werden, da keine Gefahr besteht, dass der Prozess instabil wird und bleibt, also ein sogenanntes "Stottern" auftritt. Dies wird nämlich vom Prozess durch die Anpassung der Werte bzw. Parameter bei einem neuerlichen Kurzschluss unterbunden, da dadurch der Kurzschluss im Wesentlichen gleich wieder innerhalb des Zeitfensters aufgebrochen wird, und somit die Stabilität wiederhergestellt wird.

Wenn nach Ablauf des vorgebaren Zeitfensters während des Kurzschlusses die Stromanstiegsgeschwindigkeit di/dt zum Lösen des Kurzschlusses stetig, insbesondere exponentiell, erhöht wird, kann ein möglichst rascher Aufbruch des Kurzschlusses erreicht werden.

Von Vorteil ist auch, wenn beim Aufbruch des Kurzschlusses die Stromanstiegsgeschwindigkeit bzw. die Stromanstiegszeit erfasst wird, da dadurch ein wesentlicher Parameter ermittelt wird, der für ein nachfolgendes Zeitfenster bei einem neuerlichen Kurzschluss zur Anwendung kommt. Dabei können jedoch noch weitere Parameter erfasst, verändert bzw. angepasst werden.

Wenn bei Überschreiten eines Zeitfensters beim nächstfolgenden auftretenden Kurzschluss die Stromerhöhung in dem Zeitfenster mit der zuletzt gespeicherten Stromanstiegszeit bzw. Stromanstiegsgeschwindigkeit di/dt durchgeführt wird, erfolgt dadurch innerhalb des Zeitfensters eine Anpassung und wird somit ein schnelleres Aufbrechen des Kurzschlusses ermöglicht, wodurch die Prozessstabilität verbessert werden kann.

Bei einer Maßnahme, bei der beim Auftrennen des Kurzschlusses innerhalb des Zeitfensters die Werte bzw. Parameter, insbesondere die Stromanstiegszeit bzw. Stromanstiegsgeschwindigkeit, für den nächstfolgenden Kurzschluss auf einen Ausgangswert rückgestellt wird, ist von Vorteil, dass die Prozessstabilität gegeben ist und somit wiederum ein sanftes Auftrennen des Kurzschlusses mit wenig Schweißspritzern durchgeführt werden kann.

Es ist aber auch eine Maßnahme von Vorteil, bei der bei Überschreiten des Zeitfensters die Stromanstiegsgeschwindigkeit progressiv bis zu einem vorgebbaren Maximalwert erhöht und anschließend solange auf diesem Maximalwert gehalten wird, bis der Kurzschluss aufgetrennt wird, da dadurch eine längere Lebensdauer der Bauelemente des Schweißgerätes erzielt wird und gleichzeitig die Herstellungskosten durch eine optimale Wahl für die Dimensionierung reduziert werden kann. Ein weiterer Vorteil liegt darin, dass damit auch die Schweißspritzer reduziert werden, da beim Aufbruch eines Kurzschlusses nur ein bestimmter Maximalstrom anliegt und somit der Lichtbogendruck beim Aufbruch entsprechend berücksichtigt werden kann.

Vorteilhaft sind auch die Maßnahmen, bei dem die Stromanstiegsgeschwindigkeit innerhalb des Zeitfensters verändert wird, wenn ein vorhergehender Kurzschluss über das Zeitfenster hinaus bestehen blieb, wobei die Stromanstiegsgeschwindigkeit des gerade auftretenden Kurzschlusses an die zuvor abgehandelte Kurzschlusstrennung angepasst wird, da dadurch beim nächstfolgenden Kurzschluss erreicht wird, diesen schneller aufzutrennen und somit die Stabilität des Prozesses wesentlich verbessert wird.

Von Vorteil sind auch die Maßnahmen, bei dem bei Erreichen einer voreinstellbaren Stromanstiegsgeschwindigkeit di/dt diese Stromanstiegsgeschwindigkeit beibehalten wird, da dadurch ein sehr hoher Strom erzielt werden kann und somit ein sicheres Auftrennen des Kurzschlusses möglich ist.

Es sind aber auch die Maßnahmen von Vorteil, bei denen eine Rückstellung der Werte bzw. Parameter nach einem Überschreiten eines Zeitfensters über mehrere Zeitfenster erfolgt, da dadurch eine langsame Rückführung auf die Standardwerte durchgeführt wird und somit die Stabilität des Prozesses sichergestellt wird.

Von Vorteil ist auch eine Maßnahme, bei der eine Zeitdauer, wann der Kurzschluss aufbricht, erfasst wird, worauf entsprechende Veränderungen im nächsten Zeitfenster durchgeführt werden, da dadurch ein beliebiger Stromverlauf ausgeführt werden kann.

Weiters wird die Aufgabe der Erfindung auch durch ein oben genanntes Schweißgerät gelöst, dessen Steuervorrichtung zur Durchführung des oben beschriebenen Verfahrens ausgebildet ist. Vorteilhaft ist hierbei, dass, wie bereits zuvor beschrieben, die Qualität und Stabilität durch die Anpassung an den vorhergehenden Aufbruch des Kurzschlusses verbessert wird, da dadurch erreicht wird, dass innerhalb des nachfolgenden Zeitfensters durch Anpassung des Stromverlaufes der Kurzschluss aufgetrennt wird. Durch die Anpassung an einen vorhergehenden Auftrennvorgang kann auch einer Schmelzbadschwingung entgegengewirkt werden.

Weitere vorteilhafte Ausbildungen sind in der Beschreibung beschrieben. Die sich daraus ergebenden Vorteile können ebenfalls aus der Beschreibung entnommen werden.

Die vorliegende Erfindung wird anhand der beigefügten, schematischen Zeichnungen näher erläutert, wobei die in der gesamten Beschreibung enthaltenen Offenbarungen sinngemäß auf gleiche Teile mit gleichen Bezugszeichen übertragen werden können. Weiters können auch Einzelmerkmale aus dem gezeigten Ausführungsbeispiel bzw. aus den gezeigten Ausführungsbeispielen für sich eigenständige, erfindungsgemäße Lösungen darstellen.

Darin zeigen:
Fig. 1 eine schematische Darstellung einer Schweißmaschine bzw. eines Schweißgerätes;
Fig. 2 eine schematische Darstellung eines zeitlichen Stromverlaufs zum Auftrennen eines Kurzschlusses beim Kurzlichtbogenschweißen, mit einer Strombegrenzung;
Fig. 3 eine weitere schematische Darstellung eines zeitlichen Stromverlaufs zum Auftrennen eines Kurzschlusses beim Kurzlichtbogenschweißen, mit einer beschränkten Stromanstiegsgeschwindigkeit;
Fig. 4 ein anderes Ausführungsbeispiel eines Stromverlaufs zum Auftrennen eines Kurzschlusses beim Kurzlichtbogenschweißen mit mehreren Anpassvorgängen; und
Fig. 5 ein Ausführungsbeispiel eines Stromverlaufs zum Auftrennen eines Kurzschlusses beim Kurzlichtbogenschweißen mit Erfassung einer Zeitdauer.

Einführend sei festgehalten, dass die Figuren zusammenhängend und übergreifend beschrieben sind, wobei in den unterschiedlich beschriebenen Ausführungsformen gleiche Teile mit gleichen Bezugszeichen bzw. gleichen Bauteilbezeichnungen versehen werden, und die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Ähnliche Bauteile oder funktionsähnliche Bauteile tragen gleiche Bezugszeichen mit unterschiedlichen Indizes. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

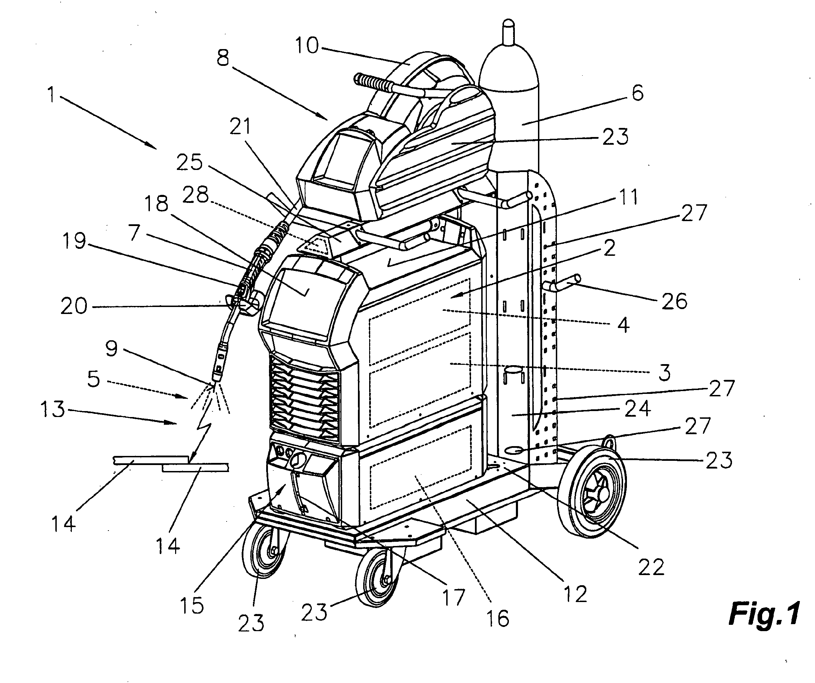

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 2, insbesondere im Gehäuse 11 der Stromquelle 2, integriert ist und nicht, wie in Fig. 1 dargestellt, als Zusatzgerät auf einen Fahrwagen 12 positioniert ist. Hierbei wird von einem so genannten kompakten Schweißgerät 1 gesprochen. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgerätes 8 ausgebildet ist, sodass der Fahrwagen 12 entfallen kann. Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung, nicht dargestellt, vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung für das weitere Potential, insbesondere das Masse-Kabel, mit der Stromquelle 2, nicht dargestellt, verbunden ist und somit über den Lichtbogen 13 bzw. den gebildeten Plasmastrahl für einen Prozess ein Stromkreis aufgebaut werden kann. Bei Verwendung eines Brenners mit internen Lichtbogen 13 sind die beiden Schweißleitungen, nicht dargestellt, zum Brenner geführt, sodass im Brenner ein entsprechender Stromkreis aufgebaut werden kann, wie dies bei Plasma-Brennern der Fall sein kann.

Zum Kühlen des Schweißbrenners 7 kann über ein Kühlgerät 15 der Schweißbrenner 7 unter Zwischenschaltung ev. Komponenten, wie beispielsweise einen Strömungswächter, mit einem Flüssigkeitsbehälter, insbesondere einem Wasserbehälter 16 mit einer Füllstandsanzeige 17, verbunden werden, wodurch bei der Inbetriebnahme des Schweißbrenners 7 das Kühlgerät 15, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf den Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Einund/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden.

Zum Starten des Schweißprozesses weist der Schweißbrenner 7 meist einen Startschalter, nicht dargestellt, auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird. Weiters ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine Kupplungsvorrichtung, nicht dargestellt, an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 21 gewährleistet ist, kann das Schlauchpaket 21 über eine Zugentlastungsvorrichtung, nicht dargestellt, mit dem Gehäuse 11 der Stromquelle 2 oder dem Drahtvorschubgerät 8 verbunden sein.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühlgerät 15 entfallen kann. Man kann also sagen, dass das Schweißgerät 1 zumindest durch die Stromquelle 2, das Drahtvorschubgerät 8 und das Kühlgerät 15 gebildet wird, wobei diese auch in einem gemeinsamen Gehäuse 11 angeordnet sein können. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet bzw. eingesetzt werden können.

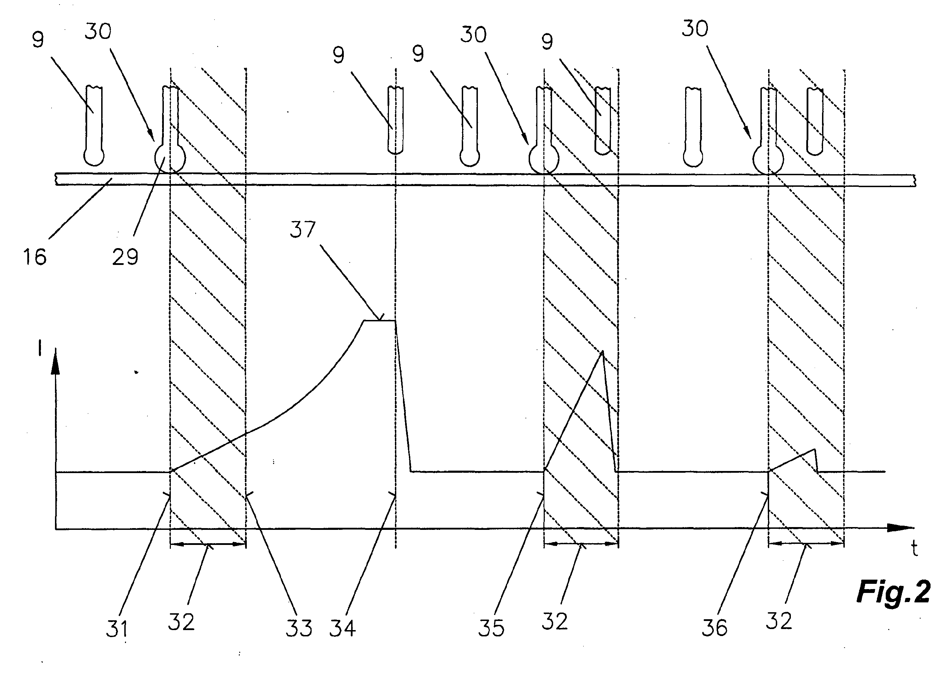

In den Fig. 2 bis 5 sind Kurzschluss-Schweißverfahren in Form von Diagrammen dargestellt, wobei auf der Ordinate der Strom I und auf der Abszisse die Zeit t aufgetragen ist. Auf eine detaillierte Beschreibung eines Kurzschluss-Schweißprozesses bzw. Kurzlichtbogenschweißprozesses, bei dem ein Tropfen 29 bzw. ein Material-Übergang durch einen Kurzschluss 30 des Schweißdrahtes 9 mit dem Schmelzbad bzw. Werkstück 16 erfolgt, wie schematisch dargestellt, wird verzichtet, da dieser hinlänglich aus dem Stand der Technik bekannt ist.

Üblicherweise wird beim Kurzschluss-Schweißen der Strom I beim Auftreten eines Kurzschlusses 30 - siehe Zeitpunkte 31 in Fig. 2 - erhöht. Dabei kann beim Auftreten des Kurzschlusses 30 zuerst der Strom I abgesenkt und anschließend erhöht werden (nicht dargestellt). Wie im Diagramm dargestellt, wird der Strom I innerhalb eines festgelegten, bevorzugt voreinstellbaren Zeitfensters 32 (strichliert und schraffiert dargestellt) kontinuierlich erhöht, um durch den erhöhten Strom I den Kurzschluss 30 durch den sogenannten "Pincheffekt" aufzutrennen. Hierbei ist es wichtig, dass durch das Auftrennen des Kurzschlusses 30 möglichst wenig Schweißspritzer gebildet werden. Um den beim Kurzschlussaufbruch entstehenden Spritzerauswurf gering zu halten wird angestrebt, den Stromanstieg möglichst gering einzustellen, d.h., dass der Stromanstieg di/dt möglichst gering gewählt wird und somit eine flache Stromanstiegskurve erzeugt wird, wie dies im Diagramm im Zeitfenster 32 ab dem Zeitpunkt 31 ersichtlich ist. Durch einen zu flach gewählten Stromanstieg ist es jedoch oftmals möglich, dass der Kurzschluss 30 nicht mehr innerhalb des festgelegten Zeitfensters 32 aufgetrennt werden kann, sodass der Schweißprozess relativ leicht instabil wird. Diese Instabilität kann beispielsweise durch eine Brennerbewegung, also ein zusätzliches Eintauchen des Schweißdrahtes 9 ins Schmelzbad, oder Schmelzbadschwingungen, usw. verursacht werden.

Aus dem Stand der Technik ist es bekannt, dass nach Überschreiten des Zeitfensters 32 bei noch nicht aufgetrenntem Kurzschluss 30 die Stromanstiegsgeschwindigkeit di/dt gleich bleibt, oder dass auf einen steileren Stromanstieg umgeschaltet wird, sodass sich der Strom I schneller erhöht und ein schnellerer Aufbruch des Kurzschlusses 30 erreicht wird.

Erfindungsgemäß ist nunmehr vorgesehen, dass ein spezielles Verfahren zum Lösen bzw. Aufbrechen des Kurzschlusses 30 durchgeführt wird, wobei nach Ablauf des Zeitfensters 32 bei andauerndem Kurzschluss 30, wie dies beispielsweise in Fig.2 zum Zeitpunkt 33 der Fall ist, der Strom, insbesondere der Schweißstrom, bzw. Stromverlauf zum Lösen bzw. Aufbrechen des Kurzschlusses 30 mit einer gegenüber der im Zeitfenster 32 verwendeten Stromanstiegszeit bzw. Stromanstiegsgeschwindigkeit di/dt höheren, insbesondere exponentiell steigenden Stromanstiegszeit bzw. Stromanstiegsgeschwindigkeit di/dt ansteigt, wobei gleichzeitig die Stromanstiegszeit bzw. Stromanstiegsgeschwindigkeit di/dt ermittelt bzw. überwacht wird, sodass die zum Zeitpunkt 34 des Auflösens des Kurzschlusses 30 aktuelle Stromanstiegszeit bzw. Stromanstiegsgeschwindigkeit di/dt gespeichert wird. Daraufhin wird beim nächstfolgenden auftretenden Kurzschluss 30 - Zeitpunkt 35 - die Stromerhöhung im Zeitfenster 32 mit der zuletzt gespeicherten Stromanstiegszeit bzw. Stromanstiegsgeschwindigkeit di/dt durchgeführt, wobei beim Auftrennen des Kurzschlusses 30 innerhalb des Zeitfensters 32 - Zeitpunkt 36 - die Stromanstiegszeit bzw. Stromanstiegsgeschwindigkeit di/dt auf einen Ausgangswert gemäß di/dt des Zeitfensters 32 zwischen den Zeitpunkten 31 und 34 rückgestellt wird.

Dabei ist es gemäß Fig. 2 auch möglich, dass bei Überschreiten des Zeitfensters 32, ab Zeitpunkt 33 die Stromanstiegsgeschwindigkeit progressiv bis zu einem vorgebbaren Maximalwert 37 erhöht wird und anschließend solange auf diesem Maximalwert 37 gehalten wird, bis der Kurzschluss 30 aufbricht. Dies hat den Vorteil, dass ein zu extensiver Spritzerauswurf durch den erhöhten Stromanstieg vermieden wird, da dieser auf einen bestimmten Grenzwert beschränkt wird und somit nicht endlos steigen kann. Tritt ein derartiger Fall ein, so wird beim nächsten Kurzschluss 30 die maximale Stromanstiegsgeschwindigkeit di/dt im Zeitfenster 32 ausgeführt. Wesentlich ist, dass die Stromanstiegsgeschwindigkeit beim nachfolgenden Kurzschluss 30 innerhalb des Zeitfensters 32 verändert wird, wenn ein vorhergehender Kurzschluss 30 über das Zeitfenster 32 hinaus bestehen blieb, d.h., dass die Stromanstiegsgeschwindigkeit bzw. die Stromanstiegszeit di/dt des gerade auftretenden Kurzschlusses 30 in Abhängigkeit der zuvor abgehandelten Kurzschlussauflösung angepasst wird.

Beim dargestellten Ausführungsbeispiel gemäß Fig. 2 wird beim Überschreiten eines Zeitfensters 32 das nächstfolgende Zeitfenster 32 angepasst und anschließend die Stromanstiegsgeschwindigkeit wieder auf den Ausgangswert zurückgesetzt, auch wenn nach dem ersten Überschreiten des Zeitfensters 32 im darauf folgenden Zeitfenster 32 wiederum eine Überschreitung stattfindet. Selbstverständlich ist es möglich, dass nach jedem Überschreiten immer wieder die nächsten folgenden Werte, insbesondere die Stromanstiegsgeschwindigkeit bzw. die Stromanstiegszeit di/dt, in Abhängigkeit der Werte des vorhergegangenen Kurzschlusses verändert werden, bis ein Kurzschluss 30 innerhalb des Zeitfensters 32 aufgelöst wird, worauf beim nächstfolgenden Kurzschluss 30 die Werte bzw. Parameter rückgesetzt werden. Dies kann auf einmal, also in einem Zeitfenster 32, oder auch in mehreren aufeinanderfolgenden Zeitfenstern 32 erfolgen, wobei im dargestellten Ausführungsbeispiel die Rücksetzung in einem Schritt, also beim nächsten Zeitfenster 32, erfolgt.

Wird gemäß Fig. 2 jedoch ein Verfahren angewandt, bei dem bei jedem Überschreiten des Zeitfensters 32 eine Änderung im nachfolgenden Zeitfenster 32 stattfindet, so erfolgt bei einem derartigen Vorgehen die Rücksetzung der Parameter, insbesondere der Stromanstiegsgeschwindigkeit, für ein Zeitfenster 32, erst dann, wenn ein Kurzschluss 30 innerhalb eines Zeitfensters 32 aufgetrennt wird, ansonst wird die Stromanstiegsgeschwindigkeit bei jedem neuen Zeitfenster 32 an die vorhergehenden Parameter angepasst. Das di/dt wird also für den nachfolgenden Kurzschluss 30, insbesondere das Zeitfenster 32, ebenfalls erhöht, bis die Kurzschlussdauer wieder unter einen vorgebbaren Wert, insbesondere innerhalb des Zeitfensters 32, gesunken ist. Dabei kann die Stromanstiegsgeschwindigkeit in einem Zeitfenster 32 auch gegenüber einem vorhergehenden Zeitfenster 32 verringert werden, da die Stromanstiegsgeschwindigkeit an den Zeitpunkt 34 beim Auftrennen des Kurzschlusses 30 angepasst wird. Somit kann einmal ein Auftrennen bei einer steileren Stromanstiegsgeschwindigkeit erfolgen, als dies beim nächsten Kurzschluss 30 der Fall ist, wodurch sich die Stromanstiegsgeschwindigkeit im Zeitfenster 32 erhöhen als auch verringern kann.

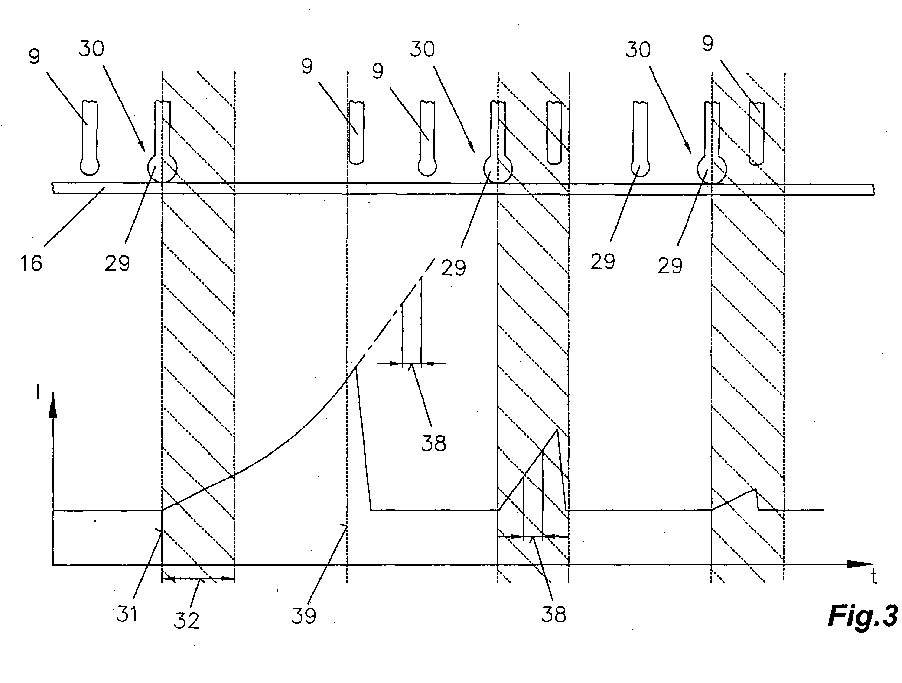

In Fig. 3 ist ein Ausführungsbeispiel dargestellt, bei dem der Strom I nunmehr nicht auf einen Maximalwert 37 beschränkt ist, sondern dieser bei Erreichen einer voreinstellbaren Stromanstiegsgeschwindigkeit 38 diese Stromanstiegsgeschwindigkeit 38, wie zum Zeitpunkt 39 ersichtlich, beibehält und der Strom I solange damit erhöht wird, bis der Kurzschluss 30 aufgebrochen wird. Wird die maximale Stromanstiegsgeschwindigkeit 38 erreicht, so wird bei einem neuerlichen Kurzschluss 30 im Zeitfenster 32 der Strom I mit der maximalen Stromanstiegsgeschwindigkeit 38 erhöht. Wird dabei jedoch der Kurzschluss 30 wieder nicht im Zeitfenster 32 aufgelöst, so setzt sich die Stromerhöhung immer nur mit der maximalen Stromanstiegsgeschwindigkeit 38 fort, bis der Kurzschluss 30 aufgebrochen wird. Bevorzugt werden bei jedem Überschreiten des Zeitfensters 32 die Werte bzw. Parameter für das nächste Zeitfenster 32 verändert und diese erst dann wieder auf die voreingestellten Werte bzw. Parameter rückgestellt, wenn ein Kurzschluss 30 innerhalb eines Zeitfensters 32 aufgebrochen wird. Der Ordnung halber sei erwähnt, dass beim Auftrennen des Kurzschlusses 30 bei einem geringern di/dt als dem maximal möglichen, beim nachfolgenden Kurzschluss 30 der Strom mit einer der beim Aufbruch des zuvor stattgefundenen Kurzschlusses 30 erfasste Stromanstiegsgeschwindigkeit im Zeitfenster 32 erhöht wird.

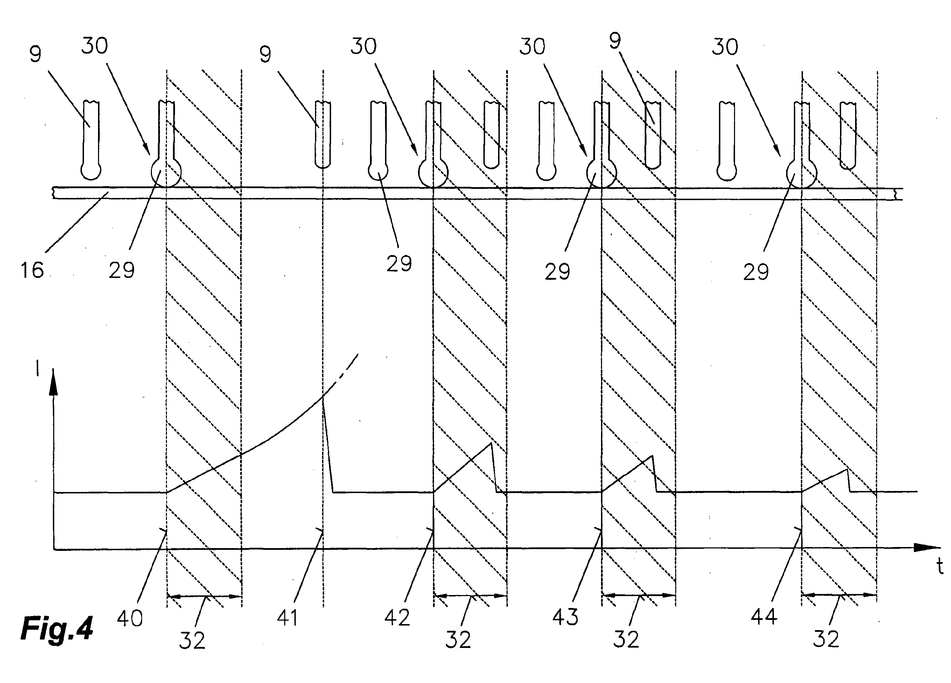

In Fig. 4 ist ein weiteres Ausführungsbeispiel dargestellt, bei dem sich nunmehr die Rückstellung der Werte bzw. Parameter nach einem Überschreiten eines Zeitfensters 32 über mehrere Zeitfenster 32 erstreckt. Dabei tritt zum Zeitpunkt 40 ein Kurzschluss 30 auf, sodass ein Zeitfenster 32 gestartet wird, in dem der Strom I mit einer voreinstellbaren Stromanstiegsgeschwindigkeit, insbesondere ein möglichst flacher Stromanstieg zur Vermeidung von Schweißspritzern, erhöht wird. Da der Kurzschluss 30 innerhalb des definierten Zeitfensters 32 nicht aufgetrennt wurde, erfolgt anschließend eine Erhöhung der Stromanstiegsgeschwindigkeit bzw. ein spezieller Stromverlauf zum möglichst raschen Auftrennen des Kurzschlusses 30. Dabei wird der Stromverlauf überwacht, um die Parameter bzw. Werte für ein ev. nachfolgendes Zeitfenster 32, also einen weiteren Kurzschluss 30, aufzunehmen und anpassen zu können.

Wie aus Fig. 4 ersichtlich, bricht zum Zeitpunkt 41 der Kurzschluss 30 auf, sodass der Strom auf den eingestellten Wert, also den Schweißstrom, abgesenkt wird und eine normale Kurzlichtbogenschweißung fortgesetzt werden kann, wobei die Werte bzw. Parameter beim Auftrennen des Kurzschlusses 30 zum Zeitpunkt 41 erfasst und gespeichert wurden. Zum Zeitpunkt 42 tritt abermals ein Kurzschluss 30 auf, sodass nunmehr aufgrund der gespeicherten Werte bzw. Parameter des zuvor stattgefundem Kurzschlusses 30 eine Veränderung des Stromverlaufes im Zeitfenster 32 zum Lösen des Kurzschlusses 30 vorgenommen wird. Bevorzugt wird die Stromanstiegsgeschwindigkeit im gerade durchgeführten Zeitfenster 32 an die Stromanstiegsgeschwindigkeit beim Auftrennen des letzten Kurzschlusses 30 (Zeitpunkt 41) angepasst. Es ist jedoch möglich, dass unterschiedlichste Kurvenformen unabhängig von dem letzten Kurzschlussaufbruch verwendet werden können, die in einem Speicher hinterlegt sind. Beispielsweise können je nach erfasstem Wert der Stromanstiegsgeschwindigkeit beim Aufbruch des Kurzschlusses 30 entsprechende Kurvenformen, prozentuelle Anteile bzw. Werte der erfassten Stromanstiegsgeschwindigkeit oder eines anderen Parameters, usw. zugeordnet werden und diese hinterlegten Werte bzw. Parameter dann für das nächste Zeitfenster 32 verwendet werden. Beispielsweise wird in einem Zeitfenster 32 der Stromanstieg linear durchgeführt und beim nächsten Zeitfenster 32 ein exponentieller Stromanstieg ausgeführt, da bei dem zuvor durchgeführten Zeitfenster 32 der Kurzschluss 30 nicht innerhalb des Zeitfensters 32 aufgebrochen wurde. Somit kann beispielsweise im darauf folgenden Fenster eine Kurvenformumschaltung vorgenommen werden.

Da im dargestellten Ausführungsbeispiel gemäß Fig. 4 eine mehrstufige Anpassung durchgeführt wird und der Kurzschluss 30 vom Zeitpunkt 42 innerhalb des Zeitfensters 32 aufbricht, werden die zuletzt gespeicherten Werte bzw. Parameter für einen neuerlichen Kurzschluss 30 wieder verändert, d.h., beispielsweise eine prozentuelle Verringerung der Stromanstiegsgeschwindigkeit vorgenommen. Tritt also ein neuerlicher Kurzschluss 30 auf, wie zum Zeitpunkt 43 ersichtlich, so wird wiederum das Zeitfenster 32 mit bestimmten gegenüber den vorhergehenden Werten bzw. Parametern veränderten Werten und Parametern für den Stromverlauf gestartet, insbesondere erfolgt eine Abflachung der Stromanstiegsgeschwindigkeit gegenüber dem zuvor durchgeführten Verlauf. Somit erfolgt eine definierte Reduzierung der Werte, insbesondere der Stromanstiegsgeschwindigkeit, wobei beispielsweise bei einem neuerlichen Kurzschluss 30, wie zum Zeitpunkt 44 ersichtlich, die Werte bzw. Parameter auf die ursprünglich eingestellten Werte bzw. Parameter rückgesetzt werden. Man kann also sagen, dass bei Überschreiten eines Zeitfensters 32 stufenweise in mehreren Schritten die Werte bzw. Parameter reduziert werden, wobei in dem dargestellten Ausführungsbeispiel zwei Stufen dargestellt sind, jedoch auch mehr Stufen möglich sind.

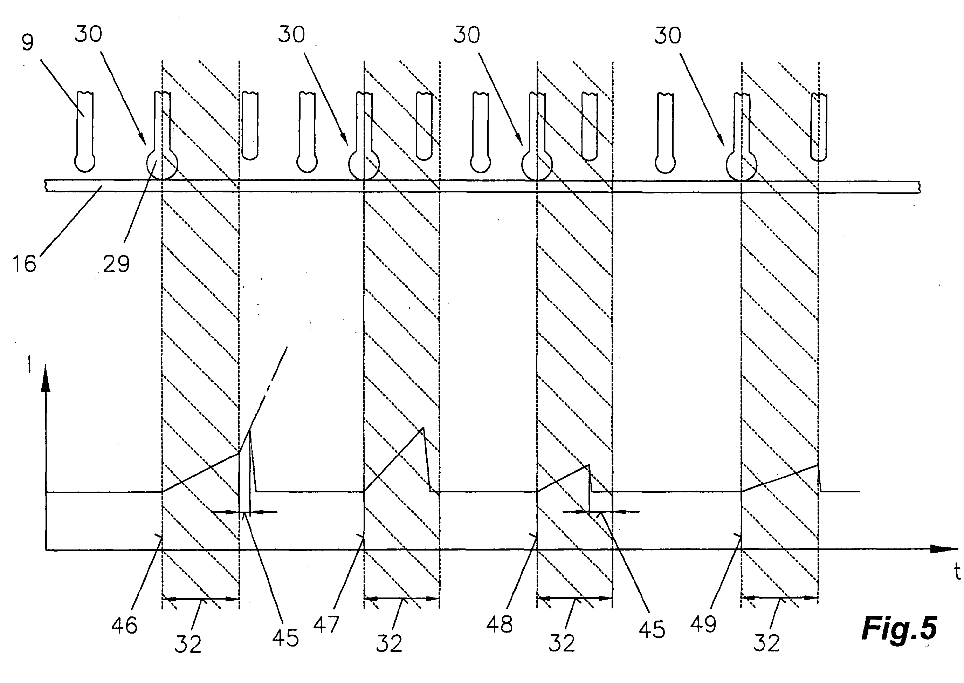

Ein weiteres Ausführungsbeispiel ist in Fig. 5 dargestellt, bei dem nunmehr nicht die Stromanstiegsgeschwindigkeit erfasst und überwacht wird, sondern eine Zeitdauer 45 wann der Kurzschluss 30 aufbricht, worauf entsprechende Veränderungen im nächsten Zeitfenster 32 durchgeführt werden. Dabei tritt zum Zeitpunkt 46 ein Kurzschluss 30 auf, worauf das Zeitfenster 32 gestartet wird und der Strom mit einer voreingestellten Stromanstiegsgeschwindigkeit innerhalb des Zeitfensters 32 linear erhöht wird, um den Kurzschluss 30 aufzubrechen. Da jedoch der Kurzschluss 30 am Ende des Zeitfensters 32 nicht aufgebrochen wurde, wird der Strom weiter erhöht, insbesondere erfolgt eine exponentielle oder lineare Steigerung des Stromverlaufs zum raschen Auftrennen des Kurzschlusses 30. Dabei wird nunmehr die Zeitdauer 45 überwacht bzw. erfasst, bis der Kurzschluss 30 aufgebrochen ist, d.h., dass nach Ablauf des Zeitfensters 32 die Zeitdauer 45 gemessen wird und entsprechend einer hinterlegten Funktion, Tabelle oder Werten eine Änderung der Werte bzw. Parameter, insbesondere der Stromanstiegsgeschwindigkeit, für das nächste Zeitfenster 32 vorgenommen wird. Tritt also ein neuerlicher Kurzschluss 30 auf, wie dies zum Zeitpunkt 47 der Fall ist, so wird nunmehr das Zeitfenster 32 gestartet, wobei jedoch die Werte bzw. Parameter innerhalb des Zeitfensters 32 gegenüber den voreingestellten Werten bzw. Parametern geändert werden. Bevorzugt wird entsprechend der zuvor überschrittenen Zeitdauer 45 eine prozentuelle Anpassung der Stromanstiegsgeschwindigkeit vorgenommen, wie dies im Zeitfenster 32 ab dem Zeitpunkt 47 ersichtlich ist.

Weiters ist es bei dem dargestellten Ausführungsbeispiel auch möglich, dass eine Absenkung der Werte bzw. Parameter, insbesondere eine Verringerung der Stromanstiegsgeschwindigkeit di/dt, vorgenommen wird. Dies kann derart erfolgen, dass, wie beispielsweise dargestellt, zu einem Zeitpunkt 48 ein Kurzschluss 30 auftritt, bei dem der Stromverlauf im Zeitfenster 32 mit den voreingestellten Werten bzw. Parametern durchgeführt wird, wobei nunmehr der Kurzschluss 30 vor Ablauf des Zeitfensters 32 aufgebrochen wird. Wie schon zuvor beschrieben, wird die Zeitdauer 45 erfasst, sodass ein gegenüber dem Ablauf des Zeitfensters 32 exakter Zeitpunkt für das Auslösen des Kurzschlusses 30 ermittelt werden kann. Dabei ist es möglich, dass beim Aufbruch des Kurzschlusses 30 die restliche verbleibende Zeitdauer 45 für das Zeitfenster 32 verwendet wird, oder dass beim Start des Zeitfensters 32 die Zeitdauer 45 miterfasst wird. Da nunmehr ein Aufbruch des Kurzschlusses 30 mit dem voreingestellten Standardwerten erfolgt, wird eine Verringerung dieser Werte, insbesondere der Stromanstiegsgeschwindigkeit, vorgenommen, sodass beim nächsten Kurzschluss 30, wie ab dem Zeitpunkt 49 ersichtlich, der Stromverlauf im Zeitfenster 32 gegenüber dem Stromverlauf im vorhergehenden Zeitfenster 32 (vom Zeitpunkt 48 beginnend) verringert wurde.

Es ist aber auch möglich, dass die Stromanstiegsgeschwindigkeit in Abhängigkeit der Differenz der tatsächlichen Kurzschlussdauer zu einer vorgebbaren Soll-Kurzschlussdauer für den nächstfolgenden Kurzschluss 30 verändert wird. Beispielsweise wird das di/dt erhöht wenn ein Kurzschluss 30 länger als eine vorgegebene Zeitspanne dauert, bzw. verringert wenn ein Kurzschluss 30 kürzer als eine vorgegebene Zeitspanne ist.

Beim verwendeten Verfahren zum Auftrennen eines Kurzschlusses 30 beim Kurzlichtbogenschweißen wird also beim Auftreten eines Kurzschlusses 30 ein Zeitfenster 32 gestartet, in dem ein definierter Stromverlauf zum Lösen des Kurzschlusses 30 innerhalb des Zeitfensters 32 durchgeführt wird, und beim Überschreiten des Zeitfensters 32 eine Erhöhung des Stromes durchgeführt, wobei nach Ablauf des Zeitfensters 32 während eines Kurzschlusses 30 dieser Stromverlauf zum Lösen des Kurzschlusses 30, erfasst und zumindest ein Wert bzw. Parameter beim Aufbruch des Kurzschlusses 30 hinterlegt bzw. gespeichert wird und zumindest ein Wert bzw. Parameter im Zeitfenster 32 des folgenden Kurzschlusses 30 in Abhängigkeit des hinterlegten Wertes bzw. Parameters angepasst. Beim Stand der Technik hingegen, wird der Stromanstieg nach Überschreitung einer vorgegebenen Kurzschlussdauer, also einem vorgegebenen Zeitfenster, auf einen fixen höheren Wert geändert, bis der Kurzschluss aufgebrochen wird. Anschließend werden die Parameter wieder rückgesetzt, sodass bei neuerlichem Auftreten eines Kurzschlusses der Aufbrechvorgang mit den voreingestellten Werten gestartet wird, wogegen bei der erfindungsgemäßen Lösung die Werte bei einem neuerlichen Kurzschluss an die vorhergehenden Werte beim Aufbruch des Kurzschlusses angepasst werden, d.h., dass beim Verfahren zum Lösen eines Kurzschlusses beim Kurzlichtbogenschweißen bei Überschreiten und/oder Unterschreiten eines definierten Zeitfensters 32 zum Lösen des Kurzschlusses 30 eine Veränderung der Werte bzw. Parameter eines nachfolgenden Zeitfensters 32 vorgenommen wird. Dabei wurde auf die detaillierte Erfassung der Prozesszustände verzichtet, da diese bereits aus dem Stand der Technik bekannt sind.

Die Stromanstiegsgeschwindigkeit kann auch vom Beginn des Kurzschlusses 30, also beim Start des Zeitfensters 32, an linear oder nach einer beliebigen vorgebbaren Funktion stetig ansteigen und dies beim Überschreiten des Zeitfensters 32 gleich oder verändert fortgesetzt werden, wobei jedoch wiederum, aufgrund des Aufbrechzeitpunktes ev. Veränderungen für den nächsten Kurzschluss 30, also das nächste Zeitfenster 32, vorgenommen werden. Weiters ist zu erwähnen, dass das Auftreten der Kurzschlüsse 30 undefiniert bzw. willkürlich ist und das Zeitfenster 32 erst durch das Erkennen eines Kurzschlusses 30 gestartet wird. Dabei ist es aber möglich, dass bei der Erkennung des Kurzschlusses 30 der Kurzschlusszustand zuerst eine bestimmte Zeit beobachtet wird, ob es sich um einen "satten" Kurzschluss 30 handelt oder ob nur ein kurzzeitiges Eintauchen des Schweißdrahtes 9 in das Schmelzbad geschehen ist. Erst wenn sichergestellt ist, dass es sich um einen Kurzschluss 30 handelt, wird das Zeitfenster 32 gestartet bzw. weitergeführt.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständlichen Erfindung im Können des auf diesem technischen Gebiet tätigen Fachmannes liegen. Es sind auch sämtliche denkbare Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang mit umfasst. Ebenso erstreckt sich der Schutz auch auf die einzelnen Komponenten der erfindungsgemäßen Vorrichtung, soweit diese für sich genommen wesentlich zur Realisierung der Erfindung sind.

## Patentansprüche

1. Verfahren zum Auftrennen eines Kurzschlusses (30) beim Kurzlichtbogenschweißen, wobei beim Auftreten eines Kurzschlusses (30) ein Zeitfenster (32) gestartet wird, in dem ein definierter Stromverlauf zum Auftrennen des Kurzschlusses (30) innerhalb des Zeitfensters (32) durchgeführt wird, und beim Überschreiten des Zeitfensters (32) eine Erhöhung des Stromes durchgeführt wird, **dadurch gekennzeichnet, dass** nach Ablauf des vorgebbaren Zeitfensters (32) während eines Kurzschlusses (30) dieser Stromverlauf zum Auftrennen des Kurzschlusses (30) erfasst und zumindest ein Wert bzw. Parameter beim Auftrennen des Kurzschlusses (30) hinterlegt bzw. gespeichert wird, wobei zumindest ein Wert bzw. Parameter im Zeitfenster (32) des folgenden Kurzschlusses (30) in Abhängigkeit des hinterlegten Wertes bzw. Parameters angepasst wird.

2. Verfahren nach Anspruch 1, **dadurch gekennzeichnet, dass** nach Ablauf des vorgebbaren Zeitfensters (32) während des Kurzschlusses (30) die Stromanstiegsgeschwindigkeit di/dt zum Auftrennen des Kurzschlusses (30) stetig, insbesondere exponentiell, erhöht wird.

3. Verfahren nach Anspruch 1 oder 2, **dadurch gekennzeichnet, dass** beim Aufbruch des Kurzschlusses (30) die Stromanstiegsgeschwindigkeit di/dt bzw. die Stromanstiegszeit erfasst wird.

4. Verfahren nach Anspruch 2 oder 3, **dadurch gekennzeichnet, dass** bei Überschreiten eines Zeitfensters (32) beim nächstfolgenden auftretenden Kurzschluss (30) die Stromerhöhung in dem Zeitfenster (32) mit der zuletzt gespeicherten Stromanstiegszeit bzw. Stromanstiegsgeschwindigkeit di/dt durchgeführt wird.

5. Verfahren nach einem der Ansprüche 1 bis 4, **dadurch gekennzeichnet, dass** beim Auftrennen des Kurzschlusses (30) innerhalb des Zeitfensters (32) die Werte bzw. Parameter, insbesondere die Stromanstiegszeit bzw. Stromanstiegsgeschwindigkeit di/dt, für den nächstfolgenden Kurzschluss (30) auf einen Ausgangswert rückgestellt wird.

6. Verfahren nach einem der Ansprüche 2 bis 5, **dadurch gekennzeichnet, dass** bei Überschreiten des Zeitfensters (32) die Stromanstiegsgeschwindigkeit di/dt progressiv bis zu einem vorgebbaren Maximalwert (37) erhöht und anschließend solange auf diesem Maximalwert (37) gehalten wird, bis der Kurzschluss (30) aufgetrennt wird.

7. Verfahren nach einem der Ansprüche 2 bis 6, **dadurch gekennzeichnet, dass** die Stromanstiegsgeschwindigkeit di/dt innerhalb des Zeitfensters (32) angepasst wird, wenn ein vorhergehender Kurzschluss (30) über das Zeitfenster (32) hinaus bestehen blieb, wobei die Stromanstiegsgeschwindigkeit des gerade auftretenden Kurzschlusses (30) an die zuvor abgehandelte Kurzschlussauftrennung angepasst wird.

8. Verfahren nach einem der Ansprüche 2 bis 7, **dadurch gekennzeichnet, dass** bei Erreichen einer voreinstellbaren Stromanstiegsgeschwindigkeit (38) di/dt diese Stromanstiegsgeschwindigkeit (38) beibehalten wird.

9. Verfahren nach einem der Ansprüche 1 bis 8, **dadurch gekennzeichnet, dass** eine Rückstellung der Werte bzw.. Parameter nach einem Überschreiten eines Zeitfensters (32) über mehrere Zeitfenster (32) erfolgt.

10. Verfahren nach einem der Ansprüche 1 bis 9, **dadurch gekennzeichnet, dass** eine Zeitdauer (45), wann der Kurzschluss (30) aufbricht, erfasst wird, worauf entsprechende Veränderungen im nächsten Zeitfenster (32) durchgeführt werden.

11. Schweißgerät (1) zum Kurzlichtbogenschweißen, mit zumindest einer Stromquelle (2) und einer Steuervorrichtung (4) und einem angeschlossenen Schweißbrenner (7), **dadurch gekennzeichnet, dass** die Steuervorrichtung (4) zur Durchführung des Verfahrens nach den Ansprüchen 1 bis 10 ausgebildet ist.

## Claims

1. A method for disconnecting a short circuit (30) during short-arc welding, wherein when a short circuit (30) occurs, a time frame (32) is started, in which a defined current profile is performed to disconnect the short circuit (30) within the time frame (32), and the current is increased if the time frame (32) is exceeded, **characterised in that** after the specifiable time frame (32) expires during a short circuit (30), said current profile for disconnecting the short circuit (30) is detected and at least one value or parameter in the disconnection of the short circuit (30) is stored or saved, wherein at least one value or parameter in the time frame (32) of the following short circuit (30) is adapted according to the stored value or parameter.

2. The method according to claim 1, **characterised in that** after the specifiable time frame (32) expires during a short circuit (30) the current increase speed di/dt for disconnecting the short circuit (30) is increased steadily, in particular exponentially.

3. The method according to claim 1 or 2, **characterised in that** the current increase speed di/dt and/or the current increase time is detected when breaking the short circuit (30).

4. The method according to claim 2 or 3, **characterised in that** when a time frame (32) is exceeded, the current increase is performed in the time frame (32) with the most recently saved current increase time and/or current increase speed di/dt during the following occurring short circuit (30).

5. The method according to any one of claims 1 to 4, **characterised in that** when disconnecting the short circuit (30) within the time frame (32), the values or parameters, in particular the current increase time and/or the current increase speed di/dt, are reset to an initial value for the following short circuit (30).

6. The method according to any one of claims 2 to 5, **characterised in that** when the time frame (32) is exceeded, the current increase speed di/dt is progressively increased up to a specifiable maximum value (37) and then kept on this maximum value (37) until the short circuit (30) is disconnected.

7. The method according to any one of claims 2 to 6, **characterised in that** the current increase speed is adapted within the time frame (32) when a previous short circuit (30) has remained present beyond the time frame (32), wherein the current increase speed of the currently occurring short circuit (30) is adapted to the previously completed disconnection of a short circuit.

8. The method according to any one of claims 2 to 7, **characterised in that** upon reaching a current increase speed (38) di/dt that can be pre-set, this current increase speed (38) is maintained.

9. The method according to any one of claims 1 to 8, **characterised in that** a resetting of the values or parameters after a time frame (32) has exceeded is performed over a number of time frames (32).

10. The method according to any one of claims 1 to 9, **characterised in that** a duration (45) when the short circuit (30) breaks is detected, whereupon corresponding modifications are performed in the next time frame (32).

11. A welding device (1) for short-arc welding, with at least one power source (2) and a control unit (4) and a connected welding torch (7), **characterised in that** the control unit (4) is designed for performing the method according to claims 1 to 10.

## Revendications

1. Procédé d'interruption d'un court-circuit (30) lors d'un soudage à l'arc court, un intervalle de temps (32) débutant lors de la survenue d'un court-circuit (30), dans lequel un flux de courant défini pour l'interruption du court-circuit (30) est réalisé durant l'intervalle de temps (32) et une augmentation de courant étant réalisée lors du dépassement de l'intervalle de temps (32), **caractérisé en ce qu'**à l'expiration de l'intervalle de temps (32) prédéterminable, lors d'un court-circuit (30), ce flux de courant pour l'interruption du court-circuit (30) est enregistré et au moins une valeur ou un paramètre est retenu voire enregistré lors de l'interruption du court-circuit (30), au moins une valeur ou un paramètre durant l'intervalle de temps (32) du court-circuit (30) suivant étant adapté en fonction de la valeur ou du paramètre enregistré.

2. Procédé selon la revendication 1, **caractérisé en ce qu'**à l'expiration de l'intervalle de temps prédéterminé (32), lors du court-circuit (30), la vitesse d'augmentation de courant di/dt est augmentée en continu, en particulier de manière exponentielle, pour l'interruption du court-circuit (30).

3. Procédé selon la revendication 1 ou 2, **caractérisé en ce que** lors de l'interruption du court-circuit (30), la vitesse d'augmentation de courant di/dt et/ou la durée d'augmentation de courant est/sont enregistrée(s).

4. Procédé selon la revendication 2 ou 3, **caractérisé en ce que** lors du dépassement d'un intervalle de temps (32) lors de la survenue du court-circuit (30) suivant, l'augmentation de courant dans l'intervalle de temps (32) est réalisée avec la durée d'augmentation de courant et/ou la vitesse d'augmentation de courant di/dt enregistrée(s) en dernier.

5. Procédé selon l'une quelconque des revendications 1 à 4, **caractérisé en ce que**, lors de l'interruption du court-circuit (30) durant l'intervalle de temps (32), les valeurs ou paramètres, en particulier la durée d'augmentation de courant et/ou la vitesse d'augmentation de courant di/dt est/sont réinitialisée(s) pour le court-circuit (30) suivant à une valeur de départ.

6. Procédé selon l'une quelconque des revendications 2 à 5, **caractérisé en ce que**, lors du dépassement de l'intervalle de temps (32), la vitesse d'augmentation de courant di/dt est progressivement augmentée jusqu'à une valeur maximale prédéterminable (37) puis est maintenue à cette valeur maximale (37) jusqu'à ce que le court-circuit (30) soit interrompu.

7. Procédé selon l'une quelconque des revendications 2 à 6, **caractérisé en ce que** la vitesse d'augmentation de courant di/dt durant l'intervalle de temps (32) est adaptée si un court-circuit (30) précédent persistait au-delà de l'intervalle de temps (32), la vitesse d'augmentation de courant du court-circuit (30) survenant alors étant adaptée à l'interruption du court-circuit traité précédemment.

8. Procédé selon l'une quelconque des revendications 2 à 7, **caractérisé en ce que**, lorsqu'une vitesse d'augmentation de courant préréglable (38) di/dt est atteinte, cette vitesse d'augmentation de courant (38) est maintenue.

9. Procédé selon l'une quelconque des revendications 1 à 8, **caractérisé en ce qu'**une réinitialisation des valeurs ou paramètres est réalisée après un dépassement d'un intervalle de temps (32) sur plusieurs intervalles de temps (32).

10. Procédé selon l'une quelconque des revendications 1 à 9, **caractérisé en ce qu'**une durée (45) d'interruption du court-circuit (30) est détectée, suite à quoi des modifications correspondantes sont apportées dans l'intervalle de temps suivant (32).

11. Appareil de soudage (1) pour le soudage à l'arc court avec au moins une source de courant (2) et un dispositif de commande (4) et un chalumeau de soudage (7) raccordé, **caractérisé en ce que** le dispositif de commande (4) est conçu pour la mise en oeuvre du procédé selon les revendications 1 à 10.
